(19) Europäisches Patentamt
European Patent Office
Office européen des brevets

(11) **EP 4 326 471 B1**

(12) **EUROPÄISCHE PATENTSCHRIFT**

(45) Veröffentlichungstag und Bekanntmachung des Hinweises auf die Patenterteilung:
**18.06.2025 Patentblatt 2025/25**

(21) Anmeldenummer: **22725180.8**

(22) Anmeldetag: **22.04.2022**

(51) Internationale Patentklassifikation (IPC):
**B23D 47/04** *(2006.01)* **B27B 5/065** *(2006.01)*
**B23D 59/00** *(2006.01)*

(52) Gemeinsame Patentklassifikation (CPC):
**B27B 5/065; B23D 47/042; B23D 59/001**

(86) Internationale Anmeldenummer:
**PCT/EP2022/060643**

(87) Internationale Veröffentlichungsnummer:
**WO 2022/223749 (27.10.2022 Gazette 2022/43)**

(54) **VORBEREITUNGSVERFAHREN ZUM VORBEREITEN DER AUFTEILUNG VON MINDESTENS ZWEI WERKSTÜCKEN, COMPUTERPROGRAMMPRODUKT, COMPUTERLESBARES SPEICHERMEDIUM, SOWIE PLATTENAUFTEILANLAGE**

PREPARATION METHOD FOR PREPARING THE DIVISION OF AT LEAST TWO WORKPIECES, COMPUTER PROGRAM PRODUCT, COMPUTER-READABLE STORAGE MEDIUM, AND BOARD-DIVIDING INSTALLATION

PROCÉDÉ DE PRÉPARATION POUR PRÉPARER LA DIVISION D'AU MOINS DEUX PIÈCES, PRODUIT-PROGRAMME INFORMATIQUE, SUPPORT D'ENREGISTREMENT LISIBLE PAR ORDINATEUR ET INSTALLATION DE DIVISION DE PANNEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2021 DE 102021110333**

(43) Veröffentlichungstag der Anmeldung:
**28.02.2024 Patentblatt 2024/09**

(73) Patentinhaber: **HOMAG Plattenaufteiltechnik GmbH**
**75365 Calw (DE)**

(72) Erfinder:
• **HARTMANN, Gerhard**
**72224 Ebhausen-Rotfelden (DE)**
• **WURSTER, Michael**
**72226 Simmersfeld (DE)**

(74) Vertreter: **DREISS Patentanwälte PartG mbB**
**Friedrichstraße 6**
**70174 Stuttgart (DE)**

(56) Entgegenhaltungen:
EP-B1- 2 326 448 DE-A1- 102017 121 958
DE-A1- 102019 100 806 US-A- 3 826 164

**Beschreibung**

Die Erfindung betrifft ein Vorbereitungsverfahren zum Vorbereiten der Aufteilung von mindestens zwei Werkstücken, ein Computerprogrammprodukt, ein computerlesbares Speichermedium, sowie eine Plattenaufteilanlage nach den Oberbegriffen der nebengeordneten Ansprüche.

Aus den Offenlegungsschriften EP 1 964 653 B1, EP 0 963 270 B1 und EP 2 540 429 A1 sind Plattenaufteilanlagen bekannt, die Werkstücktransportvorrichtungen mit

Angreifeinrichtungen aufweisen, mit denen nebeneinanderliegende Plattenstreifen gleichzeitig, jedoch in unterschiedlicher Weise einer Aufteileinrichtung zugeführt und von dieser gemeinsam aufgeteilt werden können. Bei den bekannten Plattenbearbeitungsanlagen handelt es sich um Plattenaufteilsägen, mit denen großformatige plattenförmige Werkstücke beispielsweise für die Möbelindustrie mittels einer Säge längs zu einer Arbeitslinie der Säge aufgeteilt werden können. Sie umfassen einen Zuführtisch, einen in Zuführrichtung nach diesem angeordneten Maschinentisch und einen in einer Zuführrichtung nach diesem angeordneten Entnahmetisch.

Um ein auf dem Zuführtisch liegendes Werkstück zum Maschinentisch transportieren und der dort vorhandenen Aufteileinrichtung zuführen zu können, ist eine Werkstücktransportvorrichtung mit einem portalartigen Programmschieber vorgesehen. An diesem sind eine Mehrzahl von ersten Angreifeinrichtungen in Form von Spannzangen vorhanden, die einen in Zuführrichtung gesehen hinteren Rand des Werkstücks greifen können. Durch eine Bewegung des Programmschiebers kann das ergriffene Werkstück relativ zur Aufteileinrichtung positioniert werden.

Bei der aus der Offenlegungsschrift EP 1 964 653 B1 bekannten Vorrichtung ist eine zusätzliche zweite Angreifeinrichtung in Form einer Spannzange an einem seitlichen und separat vom Programmschieber angeordneten Schlitten vorhanden, wobei der Schlitten ebenfalls parallel zur Zuführrichtung beweglich ist. Bei den aus den Offenlegungsschriften EP 0 963 270 B1 und EP 2 540 429 A1 bekannten Vorrichtungen ist eine zusätzliche und relativ zum Programmschieber parallel zur Zuführrichtung bewegliche zweite Angreifeinrichtung in Form einer Spannzange vorhanden, die am Programmschieber befestigt ist. Die Steuerung bzw. Regelung der ersten Angreifeinrichtung und der zweiten Angreifeinrichtung und von deren Bewegung und Positionierung erfolgt üblicherweise über eine computerbasierte Rechen- bzw. Steuereinrichtung. Weitere einschlägige Dokumente sind die DE 10 2019 100 806 A1, die eine Plattensägemaschine betrifft und den Oberbegriff des Anspruchs 1 offenbart, die DE 10 2017 121 958 A1, die ein Verfahren zum Aufteilen eines plattenförmigen Werkstücks betrifft, die US 3,826,164 A, die ein Verfahren und eine Vorrichtung zum aufteilen plattenförmiger Werkstücke betrifft, und die EP 2 326 448 B1, die ein Steuersystem und ein damit verbundenes Schneidverfahren betrifft.

Aufgabe der vorliegenden Erfindung ist es, eine Plattenaufteilanlage mit mindestens zwei in unterschiedlicher Weise einer Aufteileinrichtung zuführbaren Angreifeinrichtungen möglichst effizient nutzen zu können.

Diese Aufgabe wird durch ein Vorbereitungsverfahren, ein Computerprogrammprodukt, ein computerlesbares Speichermedium und eine Plattenaufteilanlage mit den Merkmalen der nebengeordneten Ansprüche gelöst. Vorteilhafte Weiterbildungen sind in Unteransprüchen angegeben.

Das erfindungsgemäße Vorbereitungsverfahren gestattet es, auch auf solchen Plattenaufteilanlagen, die über mindestens eine zweite Angreifeinrichtung verfügen, die lediglich innerhalb eines begrenzten Bewegungsbereichs relativ zur ersten Angreifeinrichtung bewegt werden kann, sehr effizient Aufteilvorgänge zur Aufteilung von Werkstücken erster Ordnung in Werkstücke zweiter Ordnung durchzuführen.

Hierzu werden dank des erfindungsgemäßen Verfahrens solche Kombinationen von Werkstücken erster Ordnung und entsprechender Zuordnung zur ersten und zweiten Angreifeinrichtung identifiziert (falls überhaupt vorhanden), die gemeinsam aufgeteilt werden können.

Insgesamt kann auf diese Weise die Anzahl der Aufteilvorgänge beim Aufteilen von Werkstücken erster Ordnung in Werkstücke zweiter Ordnung reduziert werden, wodurch sowohl die Werkzeugabnutzung verringert als auch die insgesamt zur Aufteilung benötigte Zeit reduziert wird. Somit können pro Zeiteinheit mehr Werkstücke zweiter Ordnung hergestellt werden.

Konkret wird dies erreicht durch ein Vorbereitungsverfahren zum Vorbereiten der Aufteilung von mindestens zwei Werkstücken erster Ordnung durch eine Plattenaufteilanlage, bei der die Werkstücke durch relativ zueinander bewegbare erste und zweite Angreifeinrichtungen einer Arbeitslinie einer Aufteileinrichtung in einer Zuführrichtung zugeführt und von dieser durch gemeinsame Aufteilvorgänge entlang jeweiliger Aufteillinien in Werkstücke zweiter Ordnung aufgeteilt werden können.

Bei typischen Aufteilvorgängen von plattenförmigen Werkstücken, beispielsweise zur Herstellung von Möbelteilen, werden die Werkstücke erster Ordnung auch als "Längsstreifen" oder "Plattenstreifen" bezeichnet, die durch "Längsschnitte" mittels einer Säge aus einem großformatigen plattenförmigen Ausgangswerkstück hergestellt werden. Die Werkstücke zweiter Ordnung werden typischerweise durch "Querschnitte" hergestellt, die in die Längsstreifen mittels einer Säge eingebracht werden. Die Längsschnitte und die Querschnitte liegen somit typischerweise exakt orthogonal zueinander, und bei den Werkstücken erster Ordnung und den Werkstücken zweiter Ordnung handelt es sich typischerweise um in der Draufsicht rechteckige Werkstücke.

Die erste und die zweite Angreifeinrichtung umfassen typischerweise jeweils eine oder mehrere pneumatisch betätigbare Spannzangen, die beispielsweise an einer in Zuführrichtung gesehen hinteren Kante eines Werkstücks angreifen können. Im Übrigen sei an dieser Stelle darauf hingewiesen, dass unter dem Begriff "Werkstück" vorliegend sowohl ein einzelnes Werkstück als auch ein Werkstückstapel verstanden werden kann.

Das erfindungsgemäße Vorbereitungsverfahren wird durch eine automatische Recheneinrichtung, beispielsweise einen Computer mit einem Mikroprozessor und einem Speicher, auf dem Programmcode gespeichert ist, ausgeführt. Es umfasst als Ausgangsschritt a) das Bereitstellen eines Aufteilplans, gemäß dem die beiden Werkstücke erster Ordnung in Werkstücke zweiter Ordnung aufgeteilt werden sollen. Ein solcher Aufteilplan wird üblicherweise vorab von einer Aufteilplanoptimierung erstellt. Diese hat als Optimierungskriterium üblicherweise, aus einem Ausgangswerkstück möglichst viele Werkstücke zweiter Ordnung zu erhalten bei möglichst wenig Abfallstücken.

Bei dem erfindungsgemäßen Vorbereitungsverfahren wird in einem Schritt c) in dem Aufteilplan eine Sortierung der Werkstücke zweiter Ordnung innerhalb des jeweiligen Werkstücks erster Ordnung vorgenommen, und zwar nach ihrer Länge in der Zuführrichtung gesehen derart, dass die Länge mit zunehmender Entfernung von der Arbeitslinie der Aufteileinrichtung zunimmt. Kurze Werkstücke werden also näher zur Arbeitslinie der Aufteileinrichtung angeordnet, lange Werkstücke dagegen werden weiter von der Arbeitslinie der Aufteileinrichtung entfernt angeordnet. Oder, mit anderen Worten: nach der Sortierung nehmen mit zunehmender Entfernung von der Arbeitslinie der Aufteileinrichtung die Längen der herzustellenden Werkstücke zweiter Ordnung innerhalb eines Werkstücks erster Ordnung zu.

Nun wird in einem Schritt d) eine Mehrzahl von Kombinationen von zwei Werkstücken erster Ordnung erstellt, wobei sich die Kombinationen mindestens durch die Zuordnung der Werkstücke zur ersten und zweiten Angreifeinrichtung unterscheiden. Dies kann auch als die Vornahme von Permutationen bezeichnet werden, durch die man am Ende vorzugsweise alle möglichen Kombinationen von Werkstücken erster Ordnung des bereitgestellten Aufteilplans und der ersten und der zweiten Angreifeinrichtung erhält. Im einfachsten Fall enthält der Aufteilplan nur zwei Werkstücke erster Ordnung. In diesem Fall besteht die Mehrzahl von Kombinationen lediglich aus zwei Kombinationen. Die maximale Anzahl von Kombinationen berechnet sich nach folgender Formel:

$$A = k \sum_{i=1}^{i=n-1} (n - i)$$

wobei

A = maximale Anzahl der Kombinationen

k = Anzahl der Angreifeinrichtungen

n = Anzahl der Werkstücke erster Ordnung

Ferner gehört zu dem erfindungsgemäßen Vorbereitungsverfahren in einem Schritt e) das Identifizieren von solchen Kombinationen aus der Mehrzahl von Kombinationen als gemeinsam aufteilbar (sofern überhaupt eine solche Kombination identifiziert werden kann), bei denen keine Aufteillinie an jenem Werkstück, welches der zweiten Angreifeinrichtung zugeordnet ist, parallel zur Zuführrichtung gesehen von einer Aufteillinie am anderen Werkstück, welches der ersten Angreifeinrichtung zugeordnet ist, weiter entfernt ist als die maximale Entfernung, um die die zweite Angreifeinrichtung relativ zur ersten Angreifeinrichtung von dieser weg bewegt werden kann. Es versteht sich, dass dies nur auf solche Aufteillinien bezogen ist, längs zu denen gemeinsame Aufteilvorgänge durchgeführt werden sollen, die also eine gleiche "Nummer" in der Abfolge der Aufteilvorgänge haben. Ferner versteht es sich, dass der Wert der "maximalen Entfernung" einen Toleranzbereich enthalten kann, durch den Fertigungs- und Betriebstoleranzen berücksichtigt werden.

Durch dieses Kriterium werden solche Kombinationen ausgeschlossen, bei denen das der zweiten Angreifeinrichtung zugeordnete Werkstück relativ zu dem der ersten Angreifeinrichtung zugeordneten Werkstück aufgrund des begrenzten relativen Bewegungsbereichs der zweiten Angreifeinrichtung relativ zur ersten Angreifeinrichtung nicht ausreichend weit bewegt werden kann, um durch gemeinsame Aufteilvorgänge die vorgegebenen Werkstücke zweiter Ordnung zu erzeugen.

Bei einer Weiterbildung des Vorbereitungsverfahrens ist vorgesehen, dass zwischen den Schritten a) und c) in einem Schritt b) eventuell in dem Aufteilplan vorhandene Anschnitte und Abfallteile eliminiert werden. Hierdurch wird die rechnerische Sortierung der Werkstücke zweiter Ordnung im Schritt c) erleichtert und beschleunigt. Es versteht sich, dass die Anschnitte und Abfallteile nur für den Sortiervorgang des Vorbereitungsverfahrens im Schritt c) eliminiert werden. Für die tatsächliche Durchführung des Aufteilens werden sie wieder eingeführt.

Bei einer Weiterbildung des Vorbereitungsverfahrens ist vorgesehen, dass nach dem Schritt e in einem Schritt f jene Kombination aus einer Mehrzahl von identifizierten gemeinsam aufteilbaren Kombinationen, wenn vorhanden, ermittelt wird, bei der die Werkstücke zweiter Ordnung mit der kleinsten Anzahl von Aufteilvorgängen hergestellt werden können. Auf diese Weise wird eine nochmalige Steigerung der Effizienz bei der Plattenaufteilung erreicht.

Bei einer Weiterbildung des Vorbereitungsverfahrens ist vorgesehen, dass dann, wenn im Schritt e keine gemeinsam aufteilbare Kombination identifiziert werden kann, in einem nachfolgenden Schritt g von der Recheneinrichtung in mindestens ein Werkstück erster Ordnung im Aufteilplan mindestens eine erste zusätzliche Aufteillinie eingefügt wird, durch die ein Abfallstück produziert wird, und dann ein Rücksprung zum Schritt c erfolgt. Dem liegt die Überlegung zugrunde, dass in vielen Aufteilplänen nicht genutzte Bereiche innerhalb eines Werkstücks erster Ordnung vorhanden sind. Durch das Vorsehen einer solchen zusätzlichen und zunächst nicht vorhandenen Aufteillinie wird somit die vorgesehene Anzahl und Art der Werkstücke zweiter Ordnung, die aus dem Werkstück erster Ordnung erhalten werden sollen, nicht verändert. Gleichwohl kann eine solche zusätzliche Aufteillinie eine gemeinsame Aufteilung überhaupt erst möglich machen. Dies ist besonders anschaulich beispielsweise dann der Fall, wenn zwei Werkstücke erster Ordnung gemeinsam aufgeteilt werden sollen, jedoch gemäß dem ursprünglichen Aufteilplan beim einen Werkstück erster Ordnung weniger Aufteillinien vorgesehen sind als beim anderen Werkstück erster Ordnung.

Bei einer Weiterbildung des Vorbereitungsverfahrens ist vorgesehen, dass der Schritt g nur ausgeführt wird, wenn eine Anzahl der bereits eingefügten zusätzlichen Aufteillinien in dem Werkstück erster Ordnung kleiner ist als ein Maximalwert. Dies basiert auf der Erkenntnis, dass es im Hinblick auf die Effizienz bei der Aufteilung ein Optimum gibt einerseits durch das Vorsehen eines gemeinsamen Aufteilvorgangs und andererseits aber durch das Vorsehen von möglichst wenigen Aufteilvorgängen. Würden aufgrund vieler zusätzlicher Aufteillinien viele zusätzliche Aufteilvorgänge notwendig werden, würde der Effizienzvorteil der gemeinsamen Aufteilung wieder zunichte gemacht werden. Typischerweise liegt der Maximalwert beispielsweise bei 3. Es werden typischerweise also höchstens zwei zusätzliche Aufteillinien eingefügt werden.

Bei einer Weiterbildung des Vorbereitungsverfahrens ist vorgesehen, dass dann, wenn die Anzahl der zusätzlichen Aufteillinien den Maximalwert erreicht oder überschreitet, vorgesehen wird, dass die Werkstücke erster Ordnung nicht gemeinsam aufgeteilt werden. Der Optimierungsvorgang wird somit abgebrochen, und die vorliegenden Werkstücke erster Ordnung werden einzeln aufgeteilt. Unnötig lange und die Effizienz wiederum reduzierende Optimierungsvorgänge werden auf diese Weise vermieden.

Zu der Erfindung gehören auch ein Computerprogrammprodukt, welches zur Ausführung des Vorbereitungsverfahrens mindestens eines der vorhergehenden Ansprüche angepasst ist, sowie ein computerlesbares Speichermedium, welches ein Computerprogrammprodukt gerade erwähnten Art umfasst.

Ferner gehört zu der Erfindung eine Plattenaufteilanlage mit einer Aufteileinrichtung zum Aufteilen mindestens von Werkstücken erster Ordnung in Werkstücke zweiter Ordnung, einer motorisch parallel zu einer Zuführrichtung bewegbaren ersten Angreifeinrichtung zum Zuführen eines Werkstücks erster Ordnung zu der Aufteileinrichtung und einer motorisch parallel zu der Zuführrichtung und relativ zur ersten Angreifeinrichtung bewegbaren zweiten Angreifeinrichtung zum Zuführen des selben oder eines anderen Werkstücks erster Ordnung zu derselben Aufteileinrichtung, dadurch gekennzeichnet, dass sie eine Recheneinrichtung aufweist, die zur Ausführung des Vorbereitungsverfahrens der oben beschriebenen Art angepasst ist. Es versteht sich, dass die zweite Angreifeinrichtung selbstverständlich auch in beliebige Zwischenpositionen zwischen der ersten Endlage und der zweiten Endlage bewegt werden kann.

Bei einer Weiterbildung der Plattenaufteilanlage ist vorgesehen, dass die zweite Angreifeinrichtung in einer ersten Endlage in Zuführrichtung gesehen in der gleichen Position wie die erste Angreifeinrichtung angeordnet ist, und in einer zweiten Endlage in Zuführrichtung gesehen näher zur Aufteileinrichtung angeordnet ist als die erste Angreifeinrichtung. Eine solche Plattenaufteilanlage kann besonders einfach hergestellt werden, und eine solche zweite Angreifeinrichtung kann sogar bei manchen bestehenden Plattenaufteilanlagen nachgerüstet werden. Dennoch kann auch eine solche "einfache" Plattenaufteilanlage unter Anwendung des oben beschriebenen erfindungsgemäßen Vorbereitungsverfahrens sehr effizient betrieben werden.

Nachfolgend werden Ausführungsformen der Erfindung unter Bezugnahme auf die beigefügte Zeichnung erläutert. Dabei tragen funktionsäquivalente Elemente und Bereiche auch in unterschiedlichen Figuren die gleichen Bezugszeichen. In der Zeichnung zeigen:

Figur 1    eine Draufsicht auf eine Plattenaufteilanlage mit einer ersten Angreifeinrichtung und einer zweiten Angreifeinrichtung;

Figur 2    eine perspektivische Darstellung von schräg links oben auf die erste Angreifeinrichtung und z die weite Angreifeinrichtung, wobei sich die zweite Angreifeinrichtung in einer ersten Endlage befindet;

Figur 3    eine Darstellung ähnlich wie Figur 2, wobei sich die zweite Angreifeinrichtung in einer zweiten Endlage befindet und die Angreifeinrichtungen an zwei nebeneinanderliegenden Werkstücke erster Ordnung angreifen;

Figur 4    eine Draufsicht auf ein Beispiel eines Aufteilplans zum Aufteilen eines plattenförmigen Ausgangswerkstücks;

Figur 5    eine Draufsicht auf die Plattenaufteilanlage von Figur 1 und die beiden oberen Werkstücke erster Ordnung des Aufteilplans von Figur 4 in einer nicht zulässigen Betriebslage der zweiten Angreifeinrichtung;

Figur 6     eine Darstellung des Aufteilplans von Figur 4 nach einer Eliminierung von Anschnitten und Abfallteilen während der Ausführung eines Vorbereitungsverfahrens zum Vorbereiten einer Aufteilung durch die Plattenaufteilanlage der Figuren 1-3;

Figur 7     eine Darstellung des angepassten Aufteilplans von Figur 6 nach einer Sortierung von Werkstücken zweiter Ordnung ihrer Länge nach während der Ausführung des Vorbereitungsverfahrens;

Figur 8     eine grafische Darstellung aller möglichen Kombinationen von Werkstücken erster Ordnung und ihrer Zuteilung zu erster Angreifeinrichtung und zweiter Angreifeinrichtung;

Figur 9     eine Darstellung des Aufteilplans von Figur 7 mit einer durch das Vorbereitungsverfahren als gemeinsam aufteilbar identifizierten Kombination von zwei Werkstücken erster Ordnung;

Figur 10     eine Darstellung der durch das Vorbereitungsverfahren als gemeinsam aufteilbar identifizierten Kombination von Werkstücken erster Ordnung von Figur 10 in der Aufteilanlage von Figur 1;

Figur 11     eine Darstellung des geänderten Aufteilplans von Figur 7 nach Einfügung zusätzlicher Aufteillinien während der Ausführung des Vorbereitungsverfahrens; und

Figur 12     ein Flussdiagramm des Vorbereitungsverfahrens.

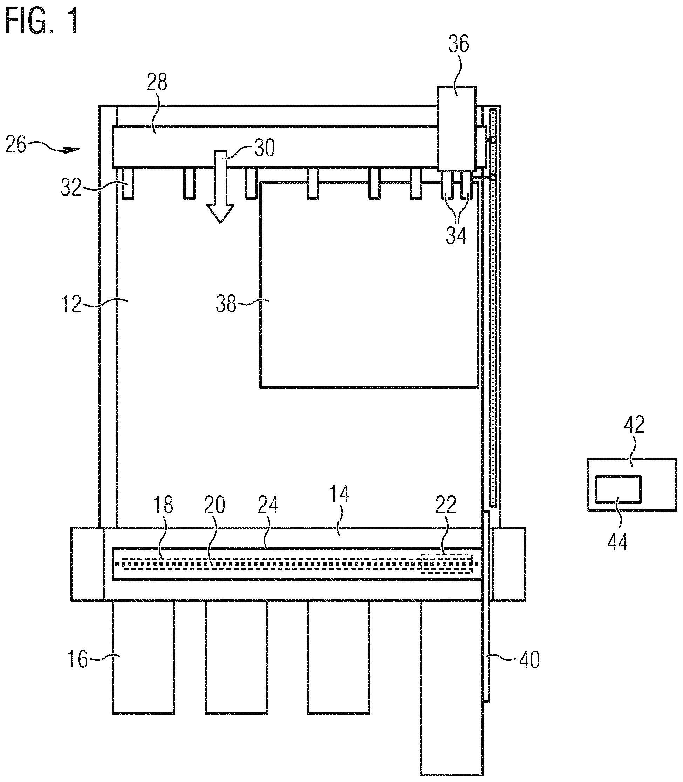

Figur 1 zeigt eine Plattenaufteilanlage 10, genauer und lediglich beispielhaft eine Plattenaufteilsäge. Sie umfasst vorliegend beispielhaft einen Zuführtisch 12, der vorliegend beispielhaft aus einer Mehrzahl von Rollenbahnen (nicht gezeichnet) gebildet ist, einen sich an den Zuführtisch 12 anschließenden Maschinentisch 14 und einen sich an den Maschinentisch 14 anschließenden Entnahmetisch 16. Letzterer ist vorliegend beispielhaft als Luftkissentisch ausgebildet und besteht vorliegend beispielhaft aus vier Segmenten, von denen aus Gründen der Einfachheit nur eines mit einem Bezugszeichen versehen ist.

Die Bearbeitung eines Werkstücks erfolgt im Bereich des Maschinentisches 14, in dem hierfür ein Sägeschlitz 18 vorhanden ist, der längs einer punktiert dargestellten und einen Bearbeitungsbereich bildenden Arbeitslinie 20 bzw. Sägelinie verläuft. Unterhalb von dem Sägeschlitz 18 ist ein längs zur Arbeitslinie 20 verfahrbarer Sägewagen 22 vorhanden, der eine Aufteileinrichtung bildet und vorliegend beispielhaft zwei Sägeblätter (nicht gezeichnet) einer Hauptsäge und einer Vorritzsäge und deren Antriebe trägt. Oberhalb von der Arbeitslinie 20 ist ein gestrichelt gezeichneter Druckbalken 24 vorhanden, der während einer Bearbeitung eines Werkstücks auf dieses abgesenkt werden kann. Grundsätzlich denkbar sind aber auch ganz andere Arten von Werkzeugen, beispielsweise Fräseinrichtungen oder ähnliches, welche zum Aufteilen von Werkstücken verwendet werden können.

Zu der Plattenbearbeitungsanlage 10 gehört ferner eine Werkstücktransportvorrichtung 26. Diese umfasst vorliegend beispielhaft einen ersten portalartigen Träger 28, der parallel zu einer Zuführrichtung (Pfeil 30) motorisch bewegbar ist und der sich quer zur Zuführrichtung 30 im Wesentlichen oberhalb von dem Zuführtisch 12 erstreckt. Der erste Träger 28 wird auch als "Programmschieber" bezeichnet. An dem ersten Träger 28 ist eine erste Angreifeinrichtung 32 vorliegend beispielhaft in Form einer Mehrzahl von pneumatisch betätigbaren ersten Spannzangen befestigt, von denen in Figur 1 aus Gründen der Übersichtlichkeit nur eine mit einem Bezugszeichen bezeichnet ist. Die ersten Spannzangen 32 sind an dem ersten Träger 28 in einer Richtung parallel zur Zuführrichtung 30 starr befestigt.

Die Werkstücktransportvorrichtung 26 umfasst ferner vorliegend beispielhaft eine zweite Angreifeinrichtung 34, die vorliegend beispielhaft zwei pneumatisch betätigte zweite Spannzangen umfasst, die an einem zweiten Träger 36 angebracht sind, der auf dem ersten Träger 28, also auf dessen Oberseite, angeordnet ist. Wie weiter unten noch dargelegt werden wird, ist der zweite Träger 36 an dem ersten Träger 28 motorisch parallel zur Zuführrichtung 30 beweglich befestigt. Man erkennt aus der Draufsicht der Figur 1 auch, dass sowohl die erste Angreifeinrichtung 32 als auch die zweite Angreifeinrichtung 34 in Zuführrichtung 30 gesehen vor dem ersten Träger 28, also zur Arbeitslinie 20 hin, angeordnet sind.

Die Werkstücktransportvorrichtung 26 dient unter anderem dazu, ein auf dem Zuführtisch 12 liegendes Ausgangswerkstück 38 in einer Richtung parallel zur Zuführrichtung 30 zu bewegen und hierdurch der Arbeitslinie 20 der Aufteileinrichtung 22 zuzuführen bzw. relativ zur Arbeitslinie 20 zu positionieren. Hierzu können die erste Angreifeinrichtung 32 und die zweite Angreifeinrichtung 34 an einem in Zuführrichtung 30 gesehen hinteren Rand des Ausgangswerkstücks 38 angreifen, in dem sie diesen klemmen.

Weiterhin kann zu der Plattenbearbeitungsanlage 10 noch eine nicht gezeigte Handhabungseinrichtung gehören, die beispielsweise eine Kombination aus einem Roboter mit einer Saugtraverse umfassen kann. Durch eine solche Handhabungseinrichtung können Werkstücke auf den Zuführtisch 12 automatisch aufgelegt oder von diesem entnommen werden, und es können Werkstücke auf den Entnahmetisch 16 automatisch aufgelegt und von diesem entnommen werden.

Zu der Plattenbearbeitungsanlage 10 gehört auch eine seitlich von den drei Auflagetischen 12, 14 und 16 angeordnete Anlageeinrichtung 40 in Form eines sich geradlinig erstreckenden leistenartigen Winkellineals. Die Anlageeinrichtung 38 erstreckt sich dabei exakt orthogonal zur Arbeitslinie 20 und dient zur Ausrichtung des Werkstücks 38 relativ zur Arbeitslinie 20.

Weiterhin gehört zu der Plattenbearbeitungsanlage 10 eine Steuerungseinrichtung 42, insbesondere eine programmierbare Steuereinrichtung, mit der die Werkstücktransportvorrichtung 26 und weitere Komponenten der Plattenaufteilanlage 10 gesteuert werden können. Eine solche Steuerungseinrichtung 42 umfasst vorzugsweise einen Mikroprozessor und einen Speicher, auf dem Programmcode zur Steuerung/Regelung verschiedener Verfahrensschritte im Betrieb der Plattenbearbeitungsanlage 10 gespeichert ist. Ferner können zu der Steuerungseinrichtung 42 eine Eingabeeinrichtung beispielsweise in Form einer Tastatur und/oder eine Ausgabeeinrichtung beispielsweise in Form eines Monitors gehören.

Die Kombination aus Mikroprozessor und Speicher bildet eine Recheneinrichtung 44. Mit dieser Recheneinrichtung 44 kann ein Vorbereitungsverfahren ausgeführt werden, mittels dem geprüft werden kann, ob bestimmte Arten von Werkstücken, nämlich Werkstücke erster Ordnung, gemeinsam durch die Aufteileinrichtung 22 aufgeteilt werden können. Hierauf wird nachfolgend noch stärker im Detail eingegangen werden. Es versteht sich, dass die Recheneinrichtung 44 zur Ausführung dieses Vorbereitungsverfahrens auch eine von der Plattenaufteilanlage 10 separate Recheneinrichtung sein kann, beispielsweise eine mobile Recheneinrichtung, insbesondere ein Tablet-PC o.ä.. Ferner kann die Recheneinrichtung 44 zur Ausführung dieses Vorbereitungsverfahrens auch eine von der Plattenaufteilanlage 10 räumlich entfernt angeordnete Recheneinrichtung sein, beispielsweise eine für die Produktionsplanung oder Produktionssteuerung verwendete Recheneinrichtung, eine Recheneinrichtung in einem Rechenzentrum, eine Recheneinrichtung in einer Cloud, etc.. Es ist insoweit keineswegs notwendig, dass die Recheneinrichtung 44 direkt an der Plattenaufteilanlage 10 angeordnet ist.

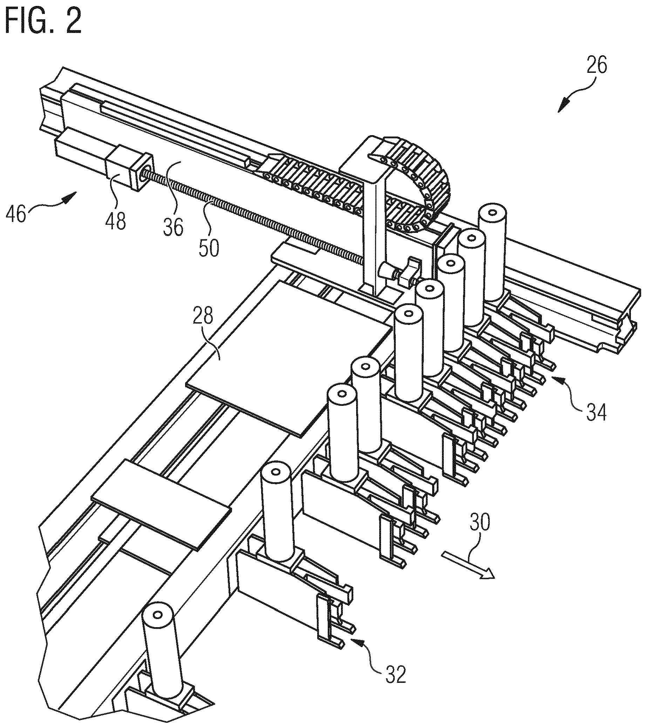

In den Figuren 1 und 2 ist eine Betriebssituation dargestellt, in der die zweite Angreifeinrichtung 34 motorisch in eine erste Endlage bewegt ist, in der sie in Zuführrichtung 30 gesehen in der gleichen Position bzw. "auf gleicher Höhe" wie die erste Angreifeinrichtung 32 angeordnet ist. Mittels einer nicht gezeigten Justiereinrichtung wurde bei der Inbetriebnahme der Werkstücktransportvorrichtung 26 eine Position der zweiten Angreifeinrichtung 34 relativ zu der ersten Angreifeinrichtung 32 so festgelegt, dass diese dann, wenn sich die zweite Angreifeinrichtung 34 in der ersten Endlage befindet, exakt mit der ersten Angreifeinrichtung 32 ausgerichtet ist. Somit können die erste Angreifeinrichtung 32 und die zweite Angreifeinrichtung 34 gemeinsam am hinteren Rand des Werkstücks 38 angreifen, wie dies in Figur 1 gezeigt ist.

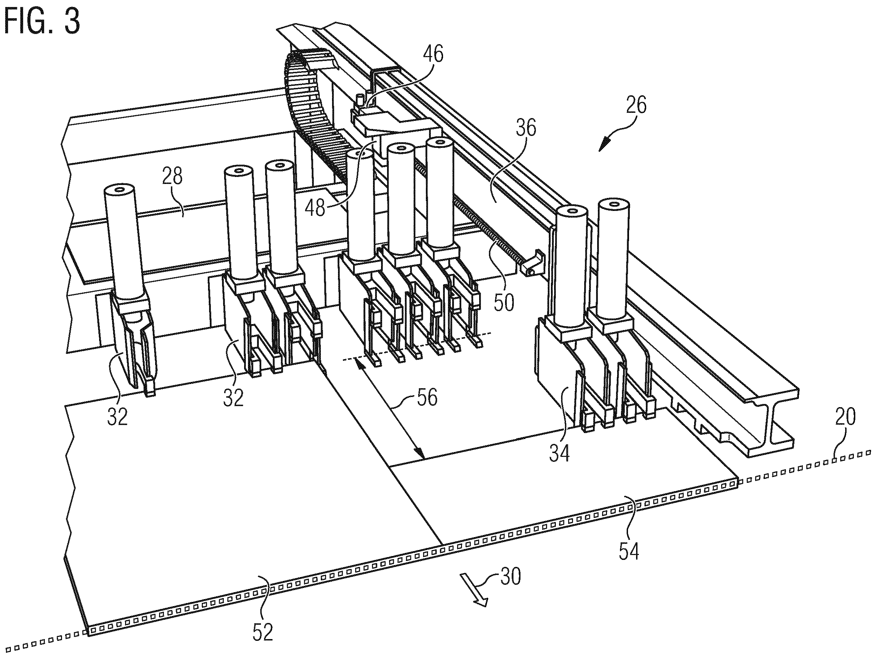

Wie aus Figur 3 ersichtlich ist, kann die zweite Angreifeinrichtung 34 motorisch relativ zu der ersten Angreifeinrichtung 32 auch bis in eine zweite Endlage bewegt werden, in der sie in Zuführrichtung 30 gesehen um eine Entfernung 56 vor der ersten Angreifeinrichtung 32 angeordnet ist. In dieser zweiten Endlage ist die zweite Angreifeinrichtung 34 also näher zur Arbeitslinie 20 als die erste Angreifeinrichtung 32. Es versteht sich, dass die zweite Angreifeinrichtung 34 nicht nur entweder in die erste Endlage oder in die zweite Endlage, sondern je nach Erfordernis in beliebige Zwischenpositionen zwischen der ersten Endlage und der zweiten Endlage bewegt werden kann. All dies kann ebenfalls von der Steuerungseinrichtung 42 gesteuert werden.

Hierzu verfügt die Werkstücktransportvorrichtung 26 über einen elektrischen Antrieb 46 mit einem Elektromotor 48, der starr am ersten Träger 28 befestigt ist und der auf eine Gewindespindel 50 wirkt, die am zweiten Träger 36 im Bereich der zweiten Angreifeinrichtung 34 befestigt ist. Über eine vorliegend nicht sichtbare Linearführung ist der zweite Träger 36 am ersten Träger 28 gelagert.

Wie aus Figur 3 ersichtlich ist, gestattet es die Möglichkeit, die zweite Angreifeinrichtung 34 relativ zu der ersten Angreifeinrichtung 32 in Zuführrichtung 30 gesehen vor dieser zu positionieren, dass die erste Angreifeinrichtung 32 einen ersten Plattenstreifen 52 und die zweite Angreifeinrichtung 34 einen zweiten Plattenstreifen 54 greifen und relativ zur Arbeitslinie 20 der Aufteileinrichtung 22 unterschiedlich positionieren kann, sodass mit einem einzigen Aufteilvorgang längs zur Arbeitslinie 20 mittels der Aufteileinrichtung 22 aus den Plattenstreifen 52 und 54 Werkstücke mit unterschiedlichen Längserstreckungen geschnitten werden können.

Das oben im Zusammenhang mit Figur 1 erwähnte Ausgangswerkstück 38 kann als ein Werkstück nullter Ordnung bezeichnet werden. Die aus diesem durch Aufteilvorgänge, sogenannte Längsschnitte, hergestellten Längsstreifen 52 und 54 können als Werkstücke erster Ordnung bezeichnet werden. Die aus den Werkstücken 52 und 54 erster Ordnung durch Aufteilvorgänge, sogenannte Querschnitte, hergestellten Werkstücke mit unterschiedlichen Längserstreckungen können als Werkstücke zweiter Ordnung bezeichnet werden.

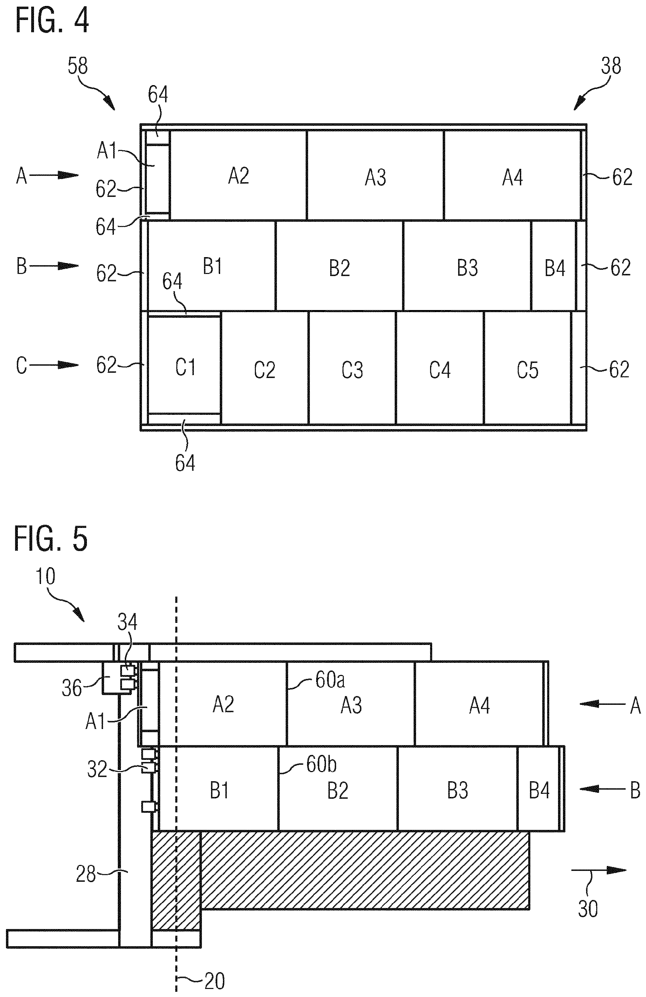

In Figur 4 ist ein Aufteilplan 58 zum Aufteilen des plattenförmigen Ausgangswerkstücks 38 von Figur 1 dargestellt. Gemäß diesem Aufteilplan 58 soll das Ausgangswerkstück 38 zunächst durch im Wesentlichen zwei Längsschnitte in drei Plattenstreifen, also Werkstücke erster Ordnung, aufgeteilt werden (dabei sind die seitlichen Besäumschnitte nicht eingerechnet). Die Plattenstreifen sind vorliegend mit A, B und C bezeichnet. Gemäß dem Aufteilplan 58 sollen die Werkstücke A-C erster Ordnung danach durch Querschnitte in Werkstücke A1, A2, ..., B1, B2, ..., und C1, C2, ..., zweiter Ordnung aufgeteilt werden.

In Figur 5 ist die (theoretische) Betriebssituation dargestellt, in der die beiden Werkstücke A und B erster Ordnung durch gemeinsame Aufteilvorgänge aufgeteilt werden, wozu das Werkstück A von der zweiten Angreifeinrichtung 36 und das Werkstück B von der ersten Angreifeinrichtung 32 gegriffen wird. Man erkennt, dass beispielsweise zum gemeinsamen Aufteilen längs der Aufteillinien 60a und 60b die zweite Angreifeinrichtung 34 in Zuführrichtung 30 gesehen hinter der ersten Angreifeinrichtung 32 sein müsste, was bei der Plattenaufteilanlage 10 konstruktionsbedingt jedoch nicht möglich ist. Insoweit ist die dargestellte Betriebssituation lediglich "theoretisch".

Daher wird nach der Bereitstellung des Aufteilplans 58 von der Recheneinrichtung 44 ein Vorbereitungsverfahren durchgeführt, welches dazu dient herauszufinden, ob durch geschicktes Umsortieren der Werkstücke zweiter Ordnung innerhalb eines Werkstücks A-C erster Ordnung sowie durch Umsortieren der Werkstücke A-C erster Ordnung untereinander und gegebenenfalls durch Ausführen zusätzlicher Maßnahmen eine Kombination von zwei Werkstücken A-C erster Ordnung gefunden werden kann, die durch gemeinsame Aufteilvorgänge und eine entsprechende Ansteuerung der ersten Angreifeinrichtung 32 und der zweiten Angreifeinrichtung 34 aufgeteilt werden können.

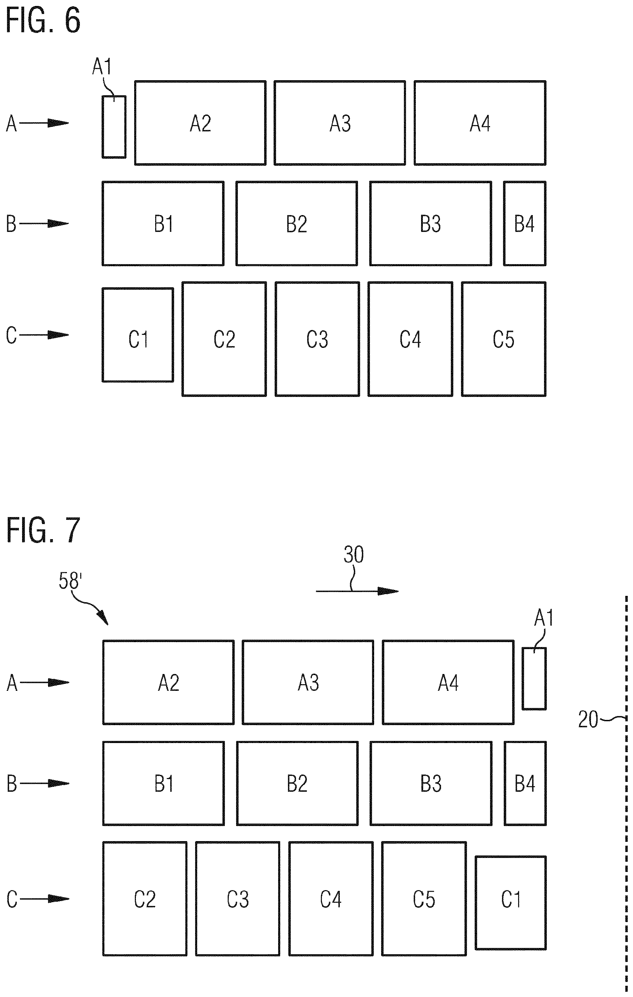

Wie aus Figur 6 ersichtlich ist, werden hierzu von der Recheneinrichtung 44 in dem Aufteilplan 58 zunächst sämtliche Anschnitte und Abfallteile eliminiert, so dass diese bei der weiteren Verfahrensdurchführung nicht berücksichtigt werden müssen. Derartige Anschnitte sind im Aufteilplan von Figur 4 durch das Bezugszeichen 62 bezeichnet, und die erwähnten Abfallteile sind in Figur 4 durch das Bezugszeichen 64 bezeichnet.

Nun werden durch die Recheneinrichtung 44 in dem von den Anschnitten 62 und Abfallteilen 64 befreiten Aufteilplan 58 die Werkstücke zweiter Ordnung innerhalb der jeweiligen Werkstücke A-C erster Ordnung nach ihrer Länge in der Zuführrichtung 30 gesehen so sortiert, dass die Länge mit zunehmender Entfernung von der Arbeitslinie 20 der Aufteileinrichtung 22 zunimmt. Konkret bedeutet dies in dem vorliegenden beispielhaften Aufteilplan 58, dass im Werkstück A erster Ordnung das Werkstück A1 zweiter Ordnung von dem in Figur 7 linken Ende an das in Figur 7 rechte Ende wandert, und analog hierzu wandert in dem Werkstück C erster Ordnung das Werkstück C1 zweiter Ordnung von dem in Figur 7 linken Ende an das in Figur 7 rechte Ende, wodurch ein Aufteilplan 58' entsteht.

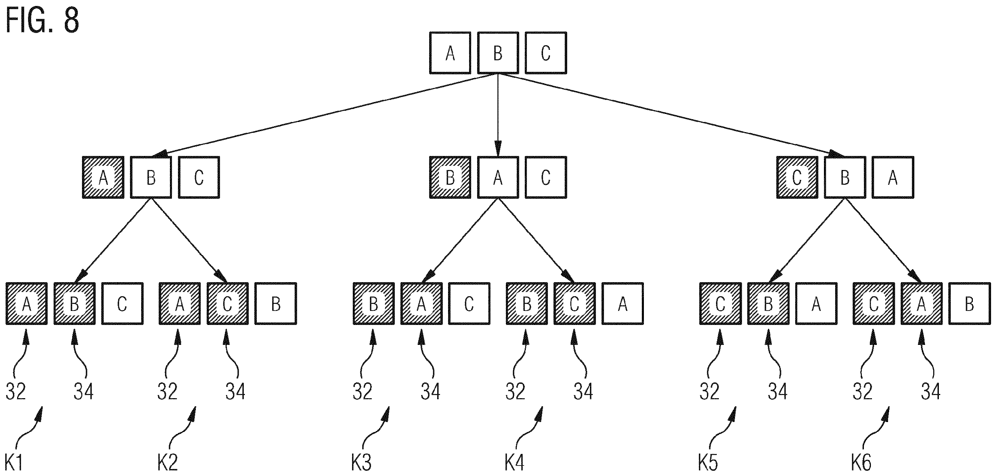

Danach wird, wie aus Figur 8 ersichtlich ist, eine Mehrzahl von Kombinationen (schwarze Kästchen) von zwei Werkstücken A|B sowie A|C und B|C erster Ordnung erstellt, wobei sich die Kombinationen durch die Zuordnung der Werkstücke A-C erster Ordnung zu den jeweiligen Angreifeinrichtungen 32 und 34 unterscheiden. Beispielhaft seien in Figur 8 die Kombinationen K1 und K3 herausgegriffen, welche beide die Werkstücke A und B erster Ordnung miteinander kombinieren. Bei der Kombination K1 ist das Werkstück A der ersten Angreifeinrichtung 32 zugeordnet, wohingegen das Werkstück B der zweiten Angreifeinrichtung 34 zugeordnet ist. Bei der Kombination K3 dagegen ist das Werkstück A der zweiten Angreifeinrichtung 34 zugeordnet, wohingegen das Werkstück B der ersten Angreifeinrichtung 32 zugeordnet ist.

Die Recheneinrichtung 44 prüft nun für jede der Kombinationen Ki (im vorliegenden beispielhaften Fall i = 1-6) die Lagen der Aufteillinien im einen Werkstück erster Ordnung relativ zu den Lagen der Aufteillinien im anderen Werkstück erster Ordnung. Dabei wird angenommen, dass die den Angreifeinrichtungen 32 bzw. 34 zugewandten Enden der Werkstücke A-C miteinander fluchten. Hierdurch können solche Kombinationen identifiziert werden, die der folgenden Bedingung genügen:

• Keine Aufteillinie an jenem Werkstück erster Ordnung, welches der zweiten Angreifeinrichtung 34 zugeordnet ist, ist parallel zur Zuführrichtung 30 gesehen von einer Aufteillinie am anderen Werkstück erster Ordnung, welches der ersten Angreifeinrichtung 32 zugeordnet ist, weiter entfernt als die maximale Entfernung 56 (Figur 3), um die die zweite Angreifeinrichtung 34 relativ zur ersten Angreifeinrichtung 32 von dieser weg bewegt werden kann.

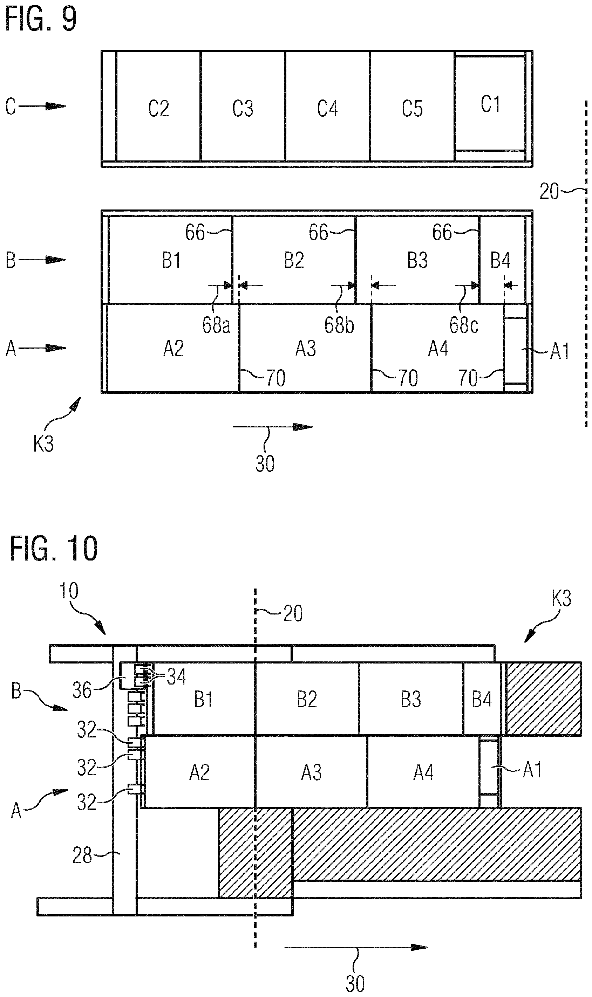

Vorliegend für den beispielhaften Schnittplan 58' ist dies bei der Kombination K3 der Fall, bei der das Werkstück B der ersten Angreifeinrichtung 32 und das Werkstück A der zweiten Angreifeinrichtung 34 zugeordnet ist. Man erkennt aus Figur 9, dass bei dieser Kombination die Aufteillinien 66 am Werkstück B, welches der zweiten Aufteileinrichtung 34 zugeordnet ist, parallel zur bzw. vorliegend in Zuführrichtung 30 gesehen immer um eine Distanz 68a, 68b beziehungsweise 68c weiter von der Arbeitslinie 20 der Aufteileinrichtung entfernt sind als die Aufteillinien 70 am Werkstück A, welches der ersten Aufteileinrichtung 32 zugeordnet ist. Dabei ist die Distanz 68a-c immer kleiner als oder höchstens gleich groß wie die maximale Entfernung 56 der zweiten Angreifeinrichtung von der ersten Angreifeinrichtung 32 in der zweiten Endlage der zweiten Angreifeinrichtung 34. Die Kombination K3 wird somit von der Recheneinrichtung 44 als "gemeinsam aufteilbar" identifiziert.

In Figur 10 ist diese Kombination K3 in die Plattenaufteilanlage 10 eingezeichnet, wobei sich die beiden Angreifeinrichtungen 32 und 34 relativ zueinander in Zuführrichtung 30 gesehen in einer bestimmten Position befinden. In dieser Position können im Werkstück B erster Ordnung die beiden Werkstücke B1 und B2 zweiter Ordnung und im Werkstück A erster Ordnung die beiden Werkstücke A2 und A3 zweiter Ordnung durch einen gemeinsamen Aufteilvorgang mittels der Aufteileinrichtung 22 längs zur Arbeitslinie 20 voneinander getrennt werden.

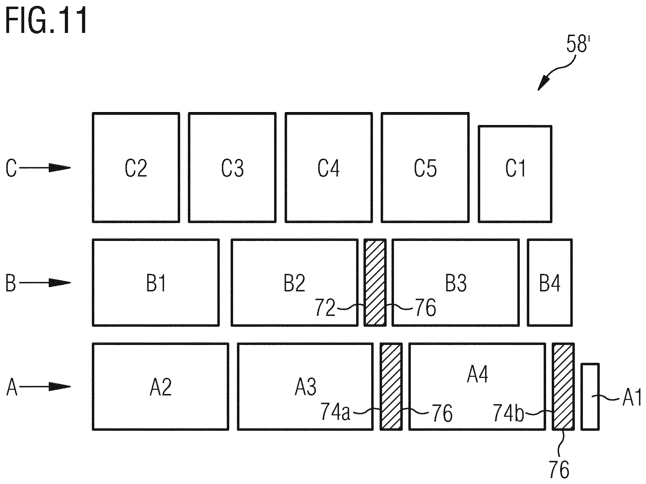

Wie aus Figur 11 ersichtlich ist, könnte die Recheneinrichtung 44 dann, wenn keine der Kombinationen Ki als gemeinsam aufteilbar identifiziert werden konnte, ein Aufteilplan 58" erzeugt werden, in den vorliegend beispielhaft im Werkstück B erster Ordnung eine zusätzliche Aufteillinie 72 oder im Werkstück C erster Ordnung zwei zusätzliche Aufteillinien 74a und 74b eingefügt werden, durch die Abfallstücke 76 produziert werden würden. Dies kommt hauptsächlich dann infrage, wenn die Anzahl der Aufteillinien der einzelnen Werkstücke A-C erster Ordnung unterschiedlich ist. Dies ist vorliegend beispielhaft bei den (ursprünglichen) Werkstücken B und C erster Ordnung des Aufteilplans 58' der Fall, denn das dortige Werkstück C erster Ordnung weist vier Aufteillinien zwischen den zu erzeugenden Werkstücken C1-C5 zweiter Ordnung auf, wohingegen das dortige Werkstück B erster Ordnung lediglich drei Aufteillinien zwischen den zu erzeugenden Werkstücken B1-B4 aufweist.

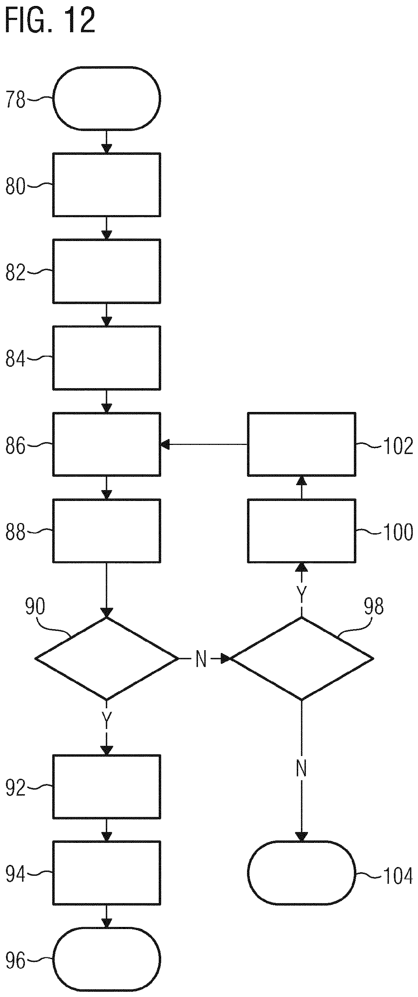

Nun wird unter Bezugnahme auf Figur 12 ein Verfahren zur Ausführung des oben beschriebenen Vorbereitungsverfahrens erläutert, welches beispielsweise von der Recheneinrichtung 44 ausgeführt werden kann, bevor das Ausgangswerkstück 38 von der Plattenaufteilanlage 10 aufgeteilt wird.

Zunächst wird in einem Funktionsblock 78 der "ursprüngliche" Aufteilplan 58 bereitgestellt, gemäß dem die Werkstücke A-C erster Ordnung in Werkstücke A1 bis C5 zweiter Ordnung aufgeteilt werden sollen (obige Figur 4). In einem Funktionsblock 80 werden danach in dem Aufteilplan 58 vorhandene Anschnitte 62 und Abfallteile 64 eliminiert, entsprechend obiger Figur 6. Hierauf werden in einem Funktionsblock 82 die von den Anschnitten 62 und Abfallteile 64 befreiten Werkstücke A-C erster Ordnung wieder zusammengefügt.

In einem Funktionsblock 84 werden die Werkstücke A1-C5 zweiter Ordnung innerhalb des jeweiligen Werkstücks A-C erster Ordnung nach ihrer Länge in der Zuführrichtung 30 gesehen derart sortiert, dass die Länge der einzelnen Werkstücke A1-C5 zweiter Ordnung mit zunehmender Entfernung von der Arbeitslinie 20 der Aufteileinrichtung zunimmt, wie dies oben im Zusammenhang mit Figur 7 erläutert wurde. Lange Werkstücke sind somit eher zu den Angreifeinrichtungen 32 und 34 benachbart, kurze Werkstücke dagegen eher zur Arbeitslinie 20 benachbart. Auf diese Weise wird der angepasste Aufteilplan 58' generiert.

In einem Funktionsblock 86 werden Kombinationen Ki von zwei Werkstücken A-C erster Ordnung gebildet, woraus sich bei drei Werkstücken A-C erster Ordnung bereits eine Anzahl von möglichen Kombinationen von drei ergibt. Zusätzlich werden weitere Kombinationen gebildet, die sich durch die Zuordnung der Werkstücke A-C erster Ordnung zur ersten Angreifeinrichtung 32 und zur zweiten Angreifeinrichtung 34 unterscheiden, wie dies oben im Zusammenhang mit Figur 8 erläutert wurde. Bei beispielhaft zwei relativ zueinander in Zuführrichtung 30 bewegbaren Angreifeinrichtungen 32 und 34 ergeben sich somit insgesamt sechs Kombinationen Ki.

In einem Funktionsblock 88 werden alle im Funktionsblock 86 erstellten Kombinationen auf die relativen Positionen der Aufteillinien geprüft. Ziel ist es, solche Kombinationen zu identifizieren, bei denen keine Aufteillinie an jenem Werkstück erster Ordnung, welches der zweiten Angreifeinrichtung 34 zugeordnet ist, parallel zur Zuführrichtung 30 gesehen weiter von einer Aufteillinie am anderen Werkstück ersten Ordnung, welches der ersten Angreifeinrichtung 32 zugeordnet ist, entfernt ist als die maximale Entfernung, um die die zweite Angreifeinrichtung 34 relativ zur ersten Angreifeinrichtung 32 von dieser weg bewegt werden kann. Da vorliegend beispielhaft die 2. Angreifeinrichtung 36 in Zuführrichtung 30 gesehen grundsätzlich nur vor der ersten Angreifeinrichtung 32 oder auf gleicher Höhe wie diese angeordnet werden kann, müssen die Aufteillinien an dem der zweiten Angreifeinrichtung 34 zugeordneten Werkstück in Zuführrichtung gesehen hinter jenen Aufteillinien an dem der ersten Angreifeinrichtung 32 zugeordneten Werkstück liegen, welche gemeinsam aufgeteilt werden sollen.

Im Funktionsblock 90 wird dann, wenn mindestens eine Kombination gefunden wurde, die das obige Kriterium erfüllt, weiter geschaltet zu einem Funktionsblock 92, in dem dann, wenn im Schritt 88 mehrere "gültige" Kombinationen gefunden wurden, jene ausgewählt wird, bei der zur Aufteilung der beiden Werkstücke A-C erster Ordnung die kleinste Anzahl von Aufteilvorgängen notwendig ist. In einem Funktionsblock 94 wird die ausgewählte Kombination in die Steuerungseinrichtung 42 der Plattenaufteilanlage 10 eingespeist, sodass entsprechend in einem Funktionsblock 96 die Aufteilung durchgeführt werden kann.

Im Funktionsblock 90 wird dann, wenn keine Kombination gefunden wurde, die das obige Kriterium erfüllt, weiter geschaltet zu einem Funktionsblock 98, in dem geprüft wird, ob von der Recheneinrichtung 44 bereits eine zusätzliche Aufteillinie in eines der Werkstücke A-C erster Ordnung eingefügt wurde, bzw. es wird geprüft, ob die Anzahl solcher zusätzlichen Aufteillinien kleiner ist als ein Grenzwert, der typischerweise 3 sein kann. Ist die Anzahl kleiner als 3, wurde beispielsweise noch keine einzige zusätzliche Aufteillinie eingefügt, wird in einem Funktionsblock 100 in eines der Werkstücke A-C erster Ordnung eine zusätzliche Aufteillinie eingefügt, durch die ein zusätzliches Abfallstück erzeugt wird. In einem nachfolgenden Funktionsblock 102 wird ein Zähler um 1 inkrementiert. Danach erfolgt ein Rücksprung zum Funktionsblock 86.

Wurde im Funktionsblock 98 festgestellt, dass die Anzahl zusätzlicher Aufteillinien den Grenzwert erreicht oder überschreitet, wird zu einem Funktionsblock 104 geschaltet, in dem die Steuerungseinrichtung 42 der Plattenaufteilanlage 10 angewiesen wird, die Werkstücke A-C erster Ordnung einzeln und nicht gemeinsam aufzuteilen.

**Patentansprüche**

1. Vorbereitungsverfahren zum Vorbereiten der Aufteilung von mindestens zwei Werkstücken (A, B, C) erster Ordnung durch eine Plattenaufteilanlage (10), bei der die Werkstücke (A, B, C) durch relativ zueinander bewegbare erste und zweite Angreifeinrichtungen (32, 34) einer Arbeitslinie (20) einer Aufteileinrichtung (22) in einer Zuführrichtung (30) zugeführt und von dieser durch gemeinsame Aufteilvorgänge entlang jeweiliger Aufteillinien (66, 70) in Werkstücke (A1-C5) zweiter Ordnung aufgeteilt werden können, wobei das Vorbereitungsverfahren durch eine automatische Recheneinrichtung (44) ausgeführt wird und mindestens den folgenden Schritt umfasst:

   a. Bereitstellen eines Aufteilplans (58), gemäß dem die Werkstücke (A, B, C) erster Ordnung in Werkstücke (A1-C5) zweiter Ordnung aufgeteilt werden sollen,

   **dadurch gekennzeichnet, dass** es ferner mindestens die folgenden Schritte umfasst:

   c. In dem Aufteilplan (58): Sortieren der Werkstücke (A1-C5) zweiter Ordnung innerhalb des jeweiligen Werkstücks (A, B, C) erster Ordnung nach ihrer Länge in der Zuführrichtung (30) gesehen derart, dass die Länge mit zunehmender Entfernung von der Arbeitslinie (20) der Aufteileinrichtung (22) zunimmt;
   d. Erstellen einer Mehrzahl von Kombinationen (K1-K6) von zwei Werkstücken (A, B, C) erster Ordnung, wobei sich die Kombinationen (Ki) mindestens durch die Zuordnung der Werkstücke (A, B, C) zur ersten und zweiten Angreifeinrichtung (32, 34) unterscheiden;
   e. Identifizieren von solchen Kombinationen (K3) als gemeinsam aufteilbar, wenn vorhanden, bei denen keine Aufteillinie (66) an jenem Werkstück (B), welches der zweiten Angreifeinrichtung (34) zugeordnet ist, parallel zur Zuführrichtung (30) gesehen weiter von einer Aufteillinie (70) am anderen Werkstück (A), welches der ersten Angreifeinrichtung (32) zugeordnet ist, entfernt ist als die maximale Entfernung (56), um die die zweite Angreifeinrichtung (34) relativ zur ersten Angreifeinrichtung (32) von dieser weg bewegt werden kann.

2. Vorbereitungsverfahren nach Anspruch 1, **dadurch gekennzeichnet, dass** zwischen den Schritten a und c in einem Schritt b eventuell in dem Aufteilplan (58) vorhandene Anschnitte (62) und Abfallteile (64) eliminiert werden.

3. Vorbereitungsverfahren nach wenigstens einem der vorhergehenden Ansprüche, **dadurch gekennzeichnet, dass** nach dem Schritt e in einem Schritt f jene Kombination (K3) aus einer Mehrzahl von identifizierten gemeinsam aufteilbaren Kombinationen, wenn vorhanden, identifiziert wird, bei der die Werkstücke (A1-C5) zweiter Ordnung mit der kleinsten Anzahl von Aufteilvorgängen hergestellt werden können.

4. Vorbereitungsverfahren nach wenigstens einem der vorhergehenden Ansprüche, **dadurch gekennzeichnet, dass** dann, wenn im Schritt e keine gemeinsam aufteilbare Kombination identifiziert werden kann, in einem nachfolgenden Schritt g von der Recheneinrichtung (44) in mindestens ein Werkstück (A, B) erster Ordnung im Aufteilplan (58") mindestens eine erste zusätzliche Aufteillinie (72, 74a-b) eingefügt wird, durch die ein Abfallstück (76) produziert wird, und dann ein Rücksprung zum Schritt c erfolgt.

5. Vorbereitungsverfahren nach Anspruch 4, **dadurch gekennzeichnet, dass** der Schritt g nur ausgeführt wird, wenn eine Anzahl der bereits eingefügten zusätzlichen Aufteillinien (72,74a-b) in dem Werkstück (A, B) erster Ordnung kleiner ist als ein Maximalwert.

6. Vorbereitungsverfahren nach Anspruch 5, **dadurch gekennzeichnet, dass** dann, wenn die Anzahl der zusätzlichen Aufteillinien (72,74 a-b) den Maximalwert erreicht oder überschreitet, vorgesehen wird, dass die Werkstücke (A, B, C) erster Ordnung nicht gemeinsam aufgeteilt werden.

7. Computerprogrammprodukt, **dadurch gekennzeichnet, dass** es zur Ausführung des Vorbereitungsverfahrens mindestens eines der vorhergehenden Ansprüche angepasst ist.

8. Computerlesbares Speichermedium, **dadurch gekennzeichnet, dass** es ein Computerprogrammprodukt nach Anspruch 7 umfasst.

9. Plattenaufteilanlage (10) mit einer Aufteileinrichtung (22) zum Aufteilen mindestens von Werkstücken (A-D) erster Ordnung in Werkstücke (A1-C5) zweiter Ordnung längs einer Arbeitslinie (20), einer motorisch parallel zu einer Zuführrichtung (30) bewegbaren ersten Angreifeinrichtung (32) zum Zuführen eines Werkstücks (A, B, C) erster Ordnung zu der Arbeitslinie (20) der Aufteileinrichtung (22) und einer motorisch parallel zu der Zuführrichtung (30) und relativ zur ersten Angreifeinrichtung (32) bewegbaren zweiten Angreifeinrichtung (34) zum Zuführen des selben oder eines anderen Werkstücks (A, B, C) erster Ordnung zu derselben Arbeitslinie (20) der Aufteileinrichtung (22), **dadurch gekennzeichnet, dass** sie eine Recheneinrichtung (44) aufweist, die zur Ausführung des Vorbereitungsverfahrens nach einem der Ansprüche 1-6 angepasst ist.

10. Plattenaufteilanlage (10) nach Anspruch 9, **dadurch gekennzeichnet, dass** die zweite Angreifeinrichtung (34) in einer ersten Endlage in Zuführrichtung (30) gesehen in der gleichen Position wie die erste Angreifeinrichtung (32) angeordnet ist, und in einer zweiten Endlage in Zuführrichtung (30) gesehen näher zur Arbeitslinie (20) der Aufteileinrichtung (22) angeordnet ist als die erste Angreifeinrichtung (32).

**Claims**

1. Preparation method for preparing the division of at least two first-order workpieces (A, B, C) by a panel dividing system (10), in which the workpieces (A, B, C) can be fed to a dividing device (22) in a feed direction (30) by first and second gripping devices (32, 34) that are movable relative to one another on a working line (20) and can be divided by the latter into second-order workpieces (A1-C5) by common dividing processes along respective dividing lines (66, 70), the preparation method being carried out by an automatic computing device (44) and comprising at least the following step:

   a. providing a dividing plan (58) according to which the first-order workpieces (A, B, C) are to be divided into second-order workpieces (A1-C5),

   **characterized in that** it further comprises the following steps:

   c. in the dividing plan (58): sorting the second-order workpieces (A1-C5) within the relevant first-order workpiece (A, B, C) according to their length when viewed in the feed direction (30) such that the length increases with increasing distance from the working line (20) of the dividing device (22);
   d. creating a plurality of combinations (K1-K6) of two first-order workpieces (A, B, C), the combinations (Ki) differing at least in the assignment of the workpieces (A, B, C) to the first and second gripping device (32, 34);
   e. identifying such combinations (K3) as jointly divisible, if present, in which no dividing line (66) on that workpiece (B) which is assigned to the second gripping device (34) is, when viewed parallel to the feed direction (30), further away from a dividing line (70) on the other workpiece (A), which is assigned to the first gripping device (32), than the maximum distance (56) by which the second gripping device (34) can be moved relative to the first gripping device (32) away from the latter.

2. Preparation method according to claim 1, **characterized in that** between steps a and c, in a step b, any off-cuts (62) and waste parts (64) present in the dividing plan (58) are eliminated.

3. Preparation method according to at least one of the preceding claims, **characterized in that** after step e, in a step f, that combination (K3) is identified from a plurality of identified jointly divisible combinations, if present, in which the second-order workpieces (A1-C5) can be produced using the smallest number of dividing processes.

4. Preparation method according to at least one of the preceding claims, **characterized in that** then, if no jointly divisible combination can be identified in step e, in a subsequent step g, the computing device (44) inserts at least one first additional dividing line (72, 74a-b) into at least one first-order workpiece (A, B) in the dividing plan (58"), by means of which a waste piece (76) is produced, and then a return to step c takes place.

5. Preparation method according to claim 4, **characterized in that** step g is only carried out if a number of the additional dividing lines (72,74a-b) already inserted in the first-order workpiece (A, B) is smaller than a maximum value.

6. Preparation method according to claim 5, **characterized in that** then, if the number of additional dividing lines (72,74 a-b) reaches or exceeds the maximum value, it is provided that the first-order workpieces (A, B, C) are not jointly divided.

7. Computer program product, **characterized in that** it is adapted to carry out the preparation method of at least one of the preceding claims.

8. Computer-readable storage medium, **characterized in that** it comprises a computer program product according to claim 7.

9. Panel dividing system (10) comprising a dividing device (22) for dividing at least first-order workpieces (A-D) into second-order workpieces (A1-C5) along a working line (20), a first gripping device (32), which is movable by a motor parallel to a feed direction (30), for feeding a first-order workpiece (A, B, C) to the working line (20) of the dividing device (22), and a second gripping device (34), which is movable by a motor parallel to the feed direction (30) and relative to the first gripping device (32), for feeding the same or another first-order workpiece (A, B, C) to the same working line (20) of the dividing device (22), **char-**

acterized in that it comprises a computing device (44) adapted to carry out the preparation method according to any of claims 1-6.

10. Panel dividing system (10) according to claim 9, **characterized in that** the second gripping device (34) is arranged in the same position as the first gripping device (32) when viewed in a first end position in the feed direction (30), and is arranged closer to the working line (20) of the dividing device (22) than the first gripping device (32) when viewed in a second end position in the feed direction (30).

**Revendications**

1. Procédé de préparation d'une division d'au moins deux pièces (A, B, C) de premier ordre par une installation de division de plaques (10) dans laquelle les pièces (A, B, C) peuvent être amenées par des premier et deuxième dispositifs de préhension (32, 34) mobiles l'un par rapport à l'autre à une ligne de travail (20) d'un dispositif de division (22) dans une direction d'alimentation (30) et divisées par celui-ci en pièces (A1-C5) de deuxième ordre par des opérations de division communes le long de lignes de division (66, 70) respectives, dans lequel le procédé de préparation est exécuté par un dispositif de calcul automatique (44) et comprend au moins l'étape suivante:

   a. la mise à disposition d'un plan de division (58) selon lequel les pièces (A, B, C) de premier ordre doivent être divisées en pièces (A1-C5) de deuxième ordre,

   **caractérisé en ce qu'**il comprend en outre au moins les étapes suivantes:

   c. dans le plan de division (58) : le tri des pièces (A1-C5) de deuxième ordre au sein de la pièce (A, B, C) respective de premier ordre en fonction de leur longueur vu dans la direction d'alimentation (30), de sorte que la longueur augmente à mesure qu'augmente l'éloignement de la ligne de travail (20) du dispositif de division (22);
   d. la création d'une pluralité de combinaisons (K1-K6) de deux pièces (A, B, C) de premier ordre, dans lequel les combinaisons (Ki) se distinguent au moins par l'affectation des pièces (A, B, C) au premier et deuxième dispositif de préhension (32, 34) ;
   e. l'identification de combinaisons (K3) comme pouvant être divisées communément, le cas échéant, pour lesquelles aucune ligne de division (66) sur la pièce (B), laquelle est affectée au deuxième dispositif de préhension (34), est plus éloignée, vu parallèlement à la direction d'alimentation (30), d'une ligne de division (70) sur l'autre pièce (A), laquelle est affectée au premier dispositif de préhension (32), que la distance maximale (56) de laquelle le deuxième dispositif de préhension (34) peut être déplacé par rapport au premier dispositif de préhension (32) en s'éloignant de celui-ci.

2. Procédé de préparation selon la revendication 1, **caractérisé en ce qu'**entre les étapes a et c, dans une étape b, des découpes (62) et chutes (64) éventuellement présentes dans le plan de division (58) sont éliminées.

3. Procédé de préparation selon au moins l'une des revendications précédentes, **caractérisé en ce qu'**après l'étape e, dans une étape f, la combinaison (K3) est identifiée parmi une pluralité de combinaisons pouvant être divisées communément identifiées, le cas échéant, pour laquelle les pièces (A1-C5) de deuxième ordre peuvent être fabriquées avec le plus petit nombre d'opérations de division.

4. Procédé de préparation selon au moins l'une des revendications précédentes, **caractérisé en ce que** si aucune combinaison pouvant être divisée communément ne peut être identifiée à l'étape e, dans une étape suivante g, au moins une première ligne de division supplémentaire (72, 74a-b), par laquelle une pièce de rebut (76) est produite, est insérée par le dispositif de calcul (44) dans au moins une pièce (A, B) de premier ordre dans le plan de division (58"), puis un retour à l'étape c s'effectue.

5. Procédé de préparation selon la revendication 4, **caractérisé en ce que** l'étape g n'est exécutée que si un nombre de lignes de division supplémentaires (72, 74a-b) déjà insérées dans la pièce (A, B) de premier ordre est inférieur à une valeur maximale.

6. Procédé de préparation selon la revendication 5, **caractérisé en ce que**, lorsque le nombre de lignes de division (72, 74 a-b) supplémentaires atteint ou dépasse la valeur maximale, il est prévu que les pièces (A, B, C) de premier ordre ne soient pas divisées communément.

7. Produit programme d'ordinateur, **caractérisé en ce qu'**il est adapté à l'exécution du procédé de préparation selon au moins l'une des revendications précédentes.

8. Support de stockage lisible par ordinateur, **caractérisé en ce qu'**il comprend un produit programme d'ordinateur selon la revendication 7.

9. Installation de division de plaques (10) avec un dispositif de division (22) pour la division au moins de pièces (A-D) de premier ordre en pièces (A1-C5) de deuxième ordre le long d'une ligne de travail (20), un premier dispositif de préhension (32) mobile motorisé parallèlement à une direction d'alimentation (30) pour amener une pièce (A, B, C) de premier ordre à la ligne de travail (20) du dispositif de division (22) et un deuxième dispositif de préhension (34) mobile motorisé parallèlement à la direction d'alimentation (30) et par rapport au premier dispositif de préhension (32) pour amener la même ou une autre pièce (A, B, C) de premier ordre à la même ligne de travail (20) du dispositif de division (22), **caractérisé en ce qu'**il présente un dispositif de calcul (44) qui est adapté à l'exécution du procédé de préparation selon l'une quelconque des revendications 1 à 6.

10. Installation de division de plaques (10) selon la revendication 9, **caractérisée en ce que** le deuxième dispositif de préhension (34) est disposé dans une première position finale vu dans la direction d'alimentation (30) dans la même position que le premier dispositif de préhension (32) et dans une deuxième position finale vu dans la direction d'alimentation (30) plus près de la ligne de travail (20) du dispositif de division (22) que le premier dispositif de préhension (32).

FIG. 1

FIG. 2

FIG. 3

EP 4 326 471 B1

# FIG. 4

# FIG. 5

# FIG. 6

A1

A → A1 | A2 | A3 | A4

B → B1 | B2 | B3 | B4

C → C1 | C2 | C3 | C4 | C5

# FIG. 7

58'

30

A1

20

A → A2 | A3 | A4 | A1

B → B1 | B2 | B3 | B4

C → C2 | C3 | C4 | C5 | C1

FIG. 8

## FIG. 9

## FIG. 10

FIG.11

58'

C ⟶ | C2 | C3 | C4 | C5 | C1

B ⟶ | B1 | B2 | 72 | 76 | B3 | B4

A ⟶ | A2 | A3 | 74a | 76 | A4 | 74b | 76 | A1

## FIG. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1964653 B1
- EP 0963270 B1
- EP 2540429 A1
- DE 102019100806 A1
- DE 102017121958 A1
- US 3826164 A
- EP 2326448 B1